# EUROPEAN PATENT SPECIFICATION

(11) **EP 1 238 898 B1**
(45) Date of publication and mention of the grant of the patent: **30.08.2006**
(21) Application number: 01302101.9
(22) Date of filing: 07.03.2001
(51) Int. Cl.: B62D 55/24, B62D 55/28

(54) **Low-noise type crawler belt with steel elements and vehicle employing said crawler belt**
Geräuscharmes Raupenband mit Stahlelementen und mit diesem Raupenband versehenes Fahrzeug
Chenille à faible niveau de bruit comportant des éléments métalliques et véhicule équipé d'une telle chenille

(43) Date of publication of application: 11.09.2002
(73) Proprietor: Takeuchi Mfg, Co., Ltd, Nagano (JP)
(72) Inventor: Shimada, Yoshihide, Hanishina-gun, Nagano (JP); Kobayashi, Kazuyuki, Hanishina-gun, Nagano (JP)
(74) Representative: Wolff, Francis Paul

(56) References cited:
- EP-A- 0 334 326
- EP-A- 0 497 597
- DE-U- 9 012 707
- GB-A- 2 229 410
- US-A- 4 281 882
- US-A- 4 687 261

## Description

### FIELD OF THE INVENTION

The present invention is directed to an endless ring-shaped crawler belt for mounting on and around a pair of crawler wheels to be rotatably driven between such crawler wheels by rotatably driving at least one of said crawler wheels.

Further, there are those in which the pair of crawler wheels is respectively structured of a sprocket wheel comprising sprocket teeth for driving one of the crawler wheels, and those in which one is a sprocket wheel and the other is a sprocketless cylindrical idler wheel for driving the sprocket wheel. Such sprocket wheels and idler wheels are hereinafter collectively referred to as crawler wheels.

### BACKGROUND OF THE INVENTION

This type of crawler belt is generally used on vehicles known as crawler vehicles. The ground pressure of crawler vehicles is low, and they are therefore employed for various uses; for example, construction machinery, as such crawler vehicles are capable of travelling at locations with unfavorable road conditions where ordinary vehicles with tire wheels are not able to run. As conventional crawler belts, known are steel crawler belts structured in a ring shape by linking metal shoes, and rubber crawler belts reinforced with steel wires and the like. Rubber crawler belts are often used with vehicles that sometimes travel on open roads since such belts do not damage the road surface and generate little travel noise. Nevertheless, such rubber crawler belts have problems in that the strength and durability are inferior in comparison to crawler belts structured by linking steel shoes, and in that it is necessary to replace the entire crawler belt even in cases where only a part of the crawler belt is damaged (particularly the travel face which contacts the ground). Thus, it is often necessary to utilize steel crawler belts in such cases.

Here, the steel crawler belt is superior in strength and durability and there is an advantage in that the respective shoes may be replaced or repaired separately, but there is a problem in that the travel noise from the crawler belt during the traveling motion is loud. Specifically, the faster the travelling speed, the louder the noise at an accelerated tempo. This noise is caused by the sound generated upon the connections linking the respective shoes colliding with the crawler wheel, and the sound continuously generated when the crawler belt is pulled and wound inside the drive crawler wheel and vigorously collides with the sprocket teeth of the crawler wheel structured of a sprocket wheel.

German Utility Model 9012707.2 discloses an endless ring-shaped crawler belt for mounting on and around a front crawler wheel and a rear crawler wheel to be rotatably driven between said crawler wheels by rotatably driving at least one of said crawler wheels, said crawler belt comprising: a plurality of inner shoe members made of steel; a plurality of outer shoe members made of steel and each arranged to oppose a respective one of said inner shoe members; an endless ring-shaped rubber belt member retained between said inner shoe members and outer shoe members; and at least one endless ring-shaped steel wire member embedded in said belt member so as to extend in the longitudinal direction of the belt member; wherein said inner shoe members are arranged side by side along the inner periphery of said belt member and said outer shoe members are arranged side by side along the outer periphery of said belt member.

### SUMMARY OF THE INVENTION

The invention provides an endless ring-shaped crawler belt for mounting on and around a front crawler wheel and a rear crawler wheel to be rotatably driven between said crawler wheels by rotatably driving at least one of said crawler wheels, said crawler belt comprising: a plurality of inner shoe members made of steel; a plurality of outer shoe members made of steel and each arranged to oppose a respective one of said inner shoe members; an endless ring-shaped rubber belt member retained between said inner shoe members and outer shoe members; and at least one endless ring-shaped steel wire member embedded in said belt member so as to extend in the longitudinal direction of the belt member; wherein said inner shoe members are arranged side by side along the inner periphery of said belt member and said outer shoe members are arranged side by side along the outer periphery of said belt member and characterised in that each said inner shoe member is partially embedded in the rubber belt member such that an inwards facing portion that, in use, engages the crawler wheels and at least one outwards facing portion that is connected to the opposed outer shoe member are exposed and in that screws or bolts by which each inner shoe member is connected to the opposed outer shoe member extend into threaded apertures or holes that lead from the at least one outwards facing portion.

Further scope of applicability of the present invention will become apparent from the detailed description given hereinafter. However, it should be understood that the detailed description and specific examples, while indicating preferred embodiments of the invention, are given by way of illustration only.

### BRIEF DESCRIPTION OF THE DRAWINGS

Fig. 1 is a cross section showing the structure of the crawler belt according to a first embodiment of the invention;
Fig. 2 is a perspective view showing a power shovel vehicle equipped with crawler belts according to the invention;
Fig. 3 is a view of the outer shoe of the crawler belt of Fig. 1 looking in the direction of arrow III;
Fig. 4 is a plan view of the crawler belt of figure 1;
Fig. 5 is a cross section of the crawler belt of Figure 1 along line V-V;
Fig. 6 is a cross section showing the structure of the a second crawler belt according to a seconde embodiment of the invention; and
Fig. 7 is a view of the outer shoe of the crawler belt of Fig. 6 looking in the direction of arrow VII.

### DESCRIPTION OF THE PREFERRED EMBODIMENTS

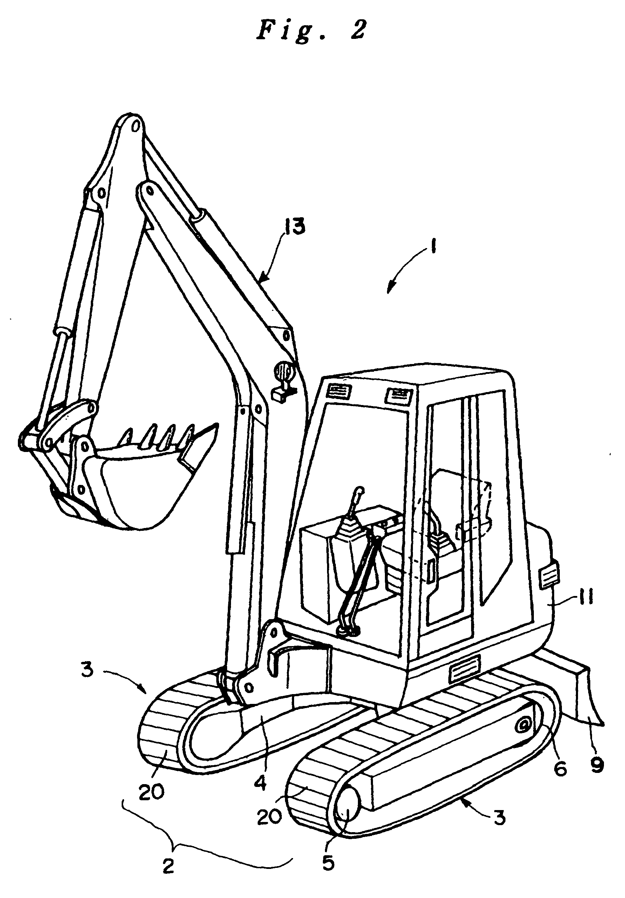

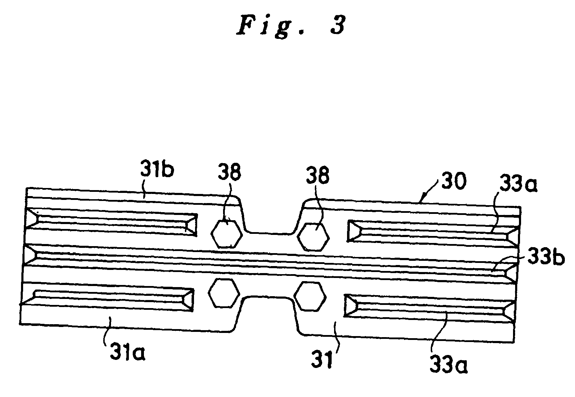

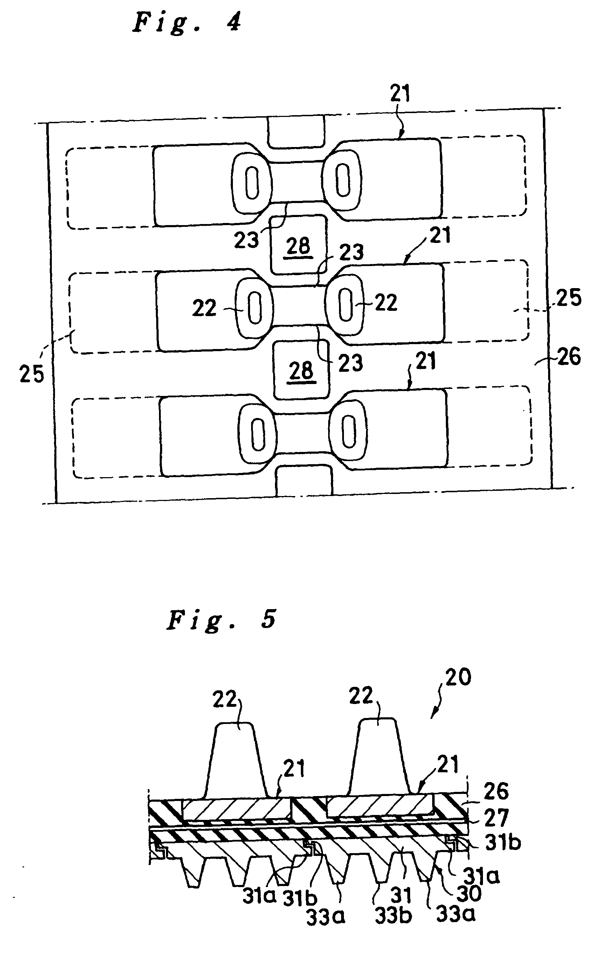

The preferred embodiments of the invention are now described with reference to the relevant drawings. Fig. 2 shows a crawler-type power shovel vehicle 1 employing the low-noise type steel crawler belt of this invention. This power shovel vehicle 1 comprises a travel dolly 4 having a travel device 2 structured with a pair of left and right crawler belts 20, a blade 9 provided to move freely upward and downward in an oscillatable manner at the rear of the vehicle a swivel slide 11 provided swivelably on the travel device 2 a power shovel mechanism 13 pivotally supported at the front portion of the swivel slide 11, and an operator cabin 15 provided on the swivel slide 11.

The travel device 2 comprises a travel dolly 4 having an approximate H shape, and respective travel mechanisms 3 provided on the left and right sides of this travel dolly 4. Each travel mechanism 3 comprises a drive sprocket wheel 5 (crawler wheel) provided at the front of this travel dolly 4, an idler wheel 6 (crawler wheel) provided at the rear thereof, and a crawler belt 20 placed around both wheels 5 and 6 and driven thereby.

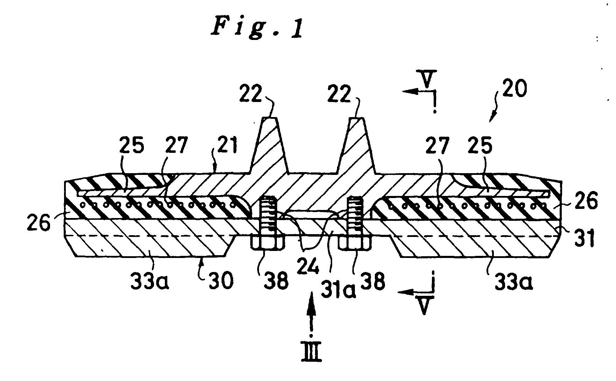

Fig. 1 shows the cross section in the width direction of the crawler belt 20, and Figs. 4 and 5 respectively show the plan view and cross section along arrow V-V of Fig. 1. The crawler belt 20 is formed in an endless ring shape by integrally molding a plurality of steel inner shoes 21 to be arranged side by side in a ring shape with a rubber belt member 26. A plurality of steel ring-shaped wires 27 is embedded in the belt member 26 in order to provide the belt member 26 with sufficient tensile strength.

The inner shoes 21 are relatively slender elongate members extending in the width direction (horizontal direction) and rectangular from a plan view, the midsection of the inner face side is exposed to the inner periphery of the belt member 26, and a pair of guide protrusions 22 are protusively formed on the inside of this exposed face. Moreover, the left and right ends 25 are embedded in the belt member 26. The left and right sides of the outer face side of the inner shoes 21 are covered with the belt member 26 while the midsection 23 thereof is left exposed, and a plurality of ring-shaped wires 27 is embedded and positioned symmetrically in the belt member 26 at such portion. Threaded apertures 24 are formed at four locations on the exposed outwards facing portion defined by the exposed midsection.

As clear from Fig. 4, the midsection 23 of the inner shoe 21 is relatively narrow in longitudinal direction (front and back direction), and opening in the form of concave portions 28 are formed between the relatively narrow midsections 23 of adjacent inner shoes 21. The concave portions 28 may penetrate to the outer face of the belt member 26. These concave portions 28 receive the sprocket teeth when the crawler belt 20 is placed around the sprocket wheel. Here, the sprocket wheel is positioned between the left and right protrusions 22 of the inner shoes 21 and guided by such left and right protrusions 22. The inside of the concave portion 28 is enclosed with rubber structuring the belt member 26, and the noise caused by the impact of the sprocket teeth and inner shoes 21 is thereby reduced. Nevertheless, the narrow midsection 23 may be exposed to the outer face of the concave portion 28 such that the sprocket teeth directly contact the inner shoes 21 at the midsection 23 so as to improve the strength and durability of the crawler belt.

As described above, a ring-shaped member is structured by uniformly disposing a plurality of inner shoes 21 in equal intervals on the inner periphery of the endless ring-shaped belt member 26, and a crawler belt 20 is structured by mounting a plurality of outer shoes 30 on the outer periphery of this ring-shaped member. As evident from Fig. 1 and Fig. 3, the outer shoes 30 are connected to the respective inner shoes 21 with four bolts 38 to be screwed in the threaded apertures 24 and mounted side by side in the longitudinal direction of the outer periphery of the belt member 26. An outer shoe 30 is formed of a flat, rectangular plate 31 and a plurality of claws 33a and 33b formed on the outer face side of the plate 31, and is connected to the inner shoe 21 at the center of the plate 31 with bolts 38. Here, the inner face of the plate 31 sandwiches and retains the belt member 26 between itself and the inner shoe 21. As clear from Fig. 3, an outer guide 31a and an inner guide 31b are formed at the front and rear of the plate 31, the outer guide 31a is placed over the inner guide 31b of adjacent outer shoes 30, and the front face of the outer periphery of the belt member 26 covers the outer shoes 30, thereby preventing the exposure of the belt member 26 to the outer periphery.

The crawler belt 20 structured as above receives the sprocket teeth in the concave portions 28, and is placed around the drive sprocket wheel 5 and the floating idler wheel 6 by positioning the sprocket wheel between the left and right protrusions 22 of the inner shoes 21, and being guided thereby. With this type of crawler belt 20, the outer shoes 30 contact the ground and the inner shoes 21 contact the wheels 5 and 6. However, as these shoes 21 and 30 are steel, the strength and abrasion resistance are superb, and considerable durability can be obtained thereby. Moreover, although the outer shoes 30 are most easily worn or damaged as a result of contacting the ground, as it is possible to individually attach and detach the outer shoes 30 in the event of such wear or damage, the durability of the overall crawler belt is improved.

Further, as the rubber belt member 26 is retained between the inner shoes 21 and the outer shoes 30 in this crawler belt 20, the noise caused by the impact of the inner shoes 21 and the wheels 5 and 6 and by the contact of the outer shoes 30 and the ground is absorbed by the belt member 26, and the noise from the crawler belt 20 during the traveling motion can be significantly reduced. Particularly, although the inner shoes 21 and the outer shoes 30 facing each other are integrally connected with bolts 38, the adjacent shoes are connected via the belt member 26, and this yields a considerable noise-reduction effect as the sound and vibration to the adjacent shoes are significantly suppressed by the belt member 26. As the belt member 26 is reinforced with the wire 27, when the crawler belt 20 is pulled into the drive sprocket wheel 5, the tensility of the wire 27 opposes the force pulling the crawler belt 20 toward the inside (sprocket side). Thereby, the force of the impact upon the crawler belt 20 being pulled inward and contacting the sprocket wheel is reduced, and the generation of the impact noise is suppressed as a result thereof.

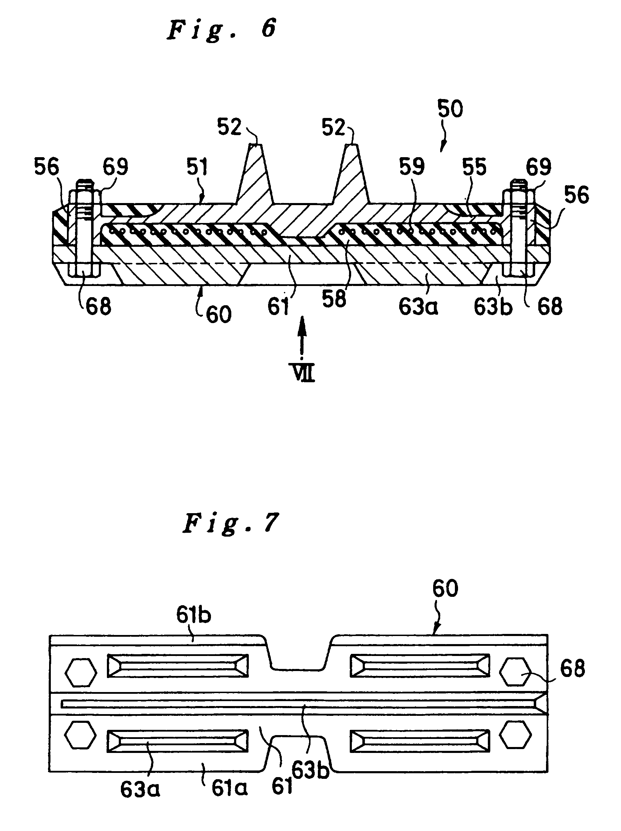

Next, another embodiment of the crawler belt of this invention is described with reference to Fig. 6 and Fig. 7. This crawler belt 50 is structured in an endless ring shape by uniformly forming a plurality of steel inner shoes 51 to be arranged side by side in a ring shape with a rubber belt member 58. And a plurality of ring-shaped wires 59 is embedded and molded in the belt member 58 in order to provide sufficient tensility to the belt member 58.

The inner shoes 51 are relatively slender rectangular members extending horizontally, the midsection of the inner face is exposed and a pair of guide protrusions 52 is formed on the inside of this exposed face. The midsection 55 at the left and right of the midsection of inner shoe 51 is embedded in the the belt member 58. The left and right ends 56 of the inner shoes 51 have respective exposed outwards facing portions provided with respective bolt-receiving holes that extend from the outwards facing portions through the respective exposed inwards facing portions on which a nut 69 is seated. Ring-shaped wires 59 are embedded in the belt member 58 at the outer face side of the inner shoes 51. In a state where the belt member 58 is embedded in and integrally molded with the inner shoes 51, similar to the crawler belt 20 shown in Figs. 1 ~ 5, a constriction is formed at the midsection of the inner shoe 51 and a concave portion for receiving the sprocket teeth is formed between the constrictions of the adjacent inner shoes 51.

As described above, a ring-shaped member is structured by uniformly disposing a plurality of inner shoes 51 in equal intervals on the inner periphery of the endless ring-shaped belt member 58, and a crawler belt 50 is structured by mounting a plurality of outer shoes 60 on the outer periphery of this ring-shaped member. The outer shoes 60 are connected to the respective inner shoes 51 by means of bolts 68 inserted into bolt insertion holes at the left and right ends 56 of the inner shoes 51 and by means of nuts 69 screwed on the bolts 68, and are mounted side by side in the longitudinal direction of the outer periphery of the belt member 58. An outer shoe 60 is formed of a flat, rectangular plate 61 and a plurality of claws 63a and 63b formed on the outer face side of the plate 61, and is connected to the inner shoe 51 at the left and right ends of the plate 61 with bolts 68 and nuts 69. Here, the inner face of the plate 61 sandwiches and retains the belt member 58 between itself and the inner shoe 51. An outer guide 61a and an inner guide 61b are formed at the front and rear of the plate 61, and the outer guide 61a is placed over the inner guide 61b of adjacent outer shoes 60, thereby preventing the exposure of the belt member 58 to the outer periphery.

The crawler belt 50 structured as above receives the sprocket teeth in concave portions (not shown), and is placed around the drive sprocket wheel 5 and the floating idler wheel 6 by positioning the sprocket wheel between the left and right protrusions 52 of the inner shoes 51, and being guided thereby. With this crawler belt 50, the inner and outer shoes 51 and 60 are steel, and the strength and abrasion resistance are superb, and considerable durability can be obtained thereby. Moreover, it is possible to individually attach and detach each of the outer shoes 60. Further, as the rubber belt member 58 is retained between the inner shoes 51 and the outer shoes 60, the noise caused by the impact of the inner shoes 51 and the sprocket wheels and by the contact of the outer shoes 60 and the ground is absorbed by the belt member 58, and the noise from the crawler belt 50 during the traveling motion can be significantly reduced.

As described above, in the embodiments the inner shoe members are arranged side by side along the inner periphery of the belt member, the outer shoe members are arranged side by side along the outer periphery of the belt member, and concave portions are arranged in the longitudinal direction between the inner shoes and open toward the inner periphery of the belt member for receiving sprocket teeth so that the crawler belt may be placed around the crawler wheel (sprocket wheel). As the crawler wheel contacts the steel inner shoe members and engages with the crawler belt, it is thereby possible to secure the strength of the portion contacting the crawler wheel and to improve the strength and durability of the crawler belt. Further, as the steel outer shoe members mounted on the outer periphery contact the road surface, it is also possible to improve the strength and durability of such portion. And when such steel outer shoe members become worn or damaged, it is possible to independently replace each of such outer shoe members. Repair may thereby be conducted easily and at low cost. In addition, as the rubber belt member is retained between the inner and outer shoe members and such inner and outer shoe members are respectively mounted side by side in the longitudinal direction of the belt member, the noise caused by the impact of the inner shoe members and the crawler wheel is absorbed by the rubber belt member, and the travel noise is reduced thereby. Moreover, as a wire member embedded in the belt member is formed in a ring shape within the crawler belt, the tensility of the wire member inhibits the crawler belt from being pulled inside upon being wound into the crawler wheel. Thus, the force of the impact of the inner shoe members and the crawler wheel is weakened, and the travel noise is reduced thereby.

The inner shoe members are arranged such that they are embedded in the belt member and integrated thereto in a state where the portion or portions contacting the crawler wheel at the inner periphery and the portion or portions connected to the outer shoe members at the outer periphery are exposed, and the outer shoe members are connected to the inner shoe members with bolts at the outer exposed portion of the inner shoe members. Thereby, it is possible to connect the inner shoe members in an endless ring shape while being arranged side by side on the inner face with the belt member, and a crawler belt may be prepared by respectively connecting the outer shoe members with bolts to the outwards facing exposed portion(s) of the outer face of the inner shoe members. Thus, it is possible to easily attach and detach the respective outer shoes independently. And when such outer shoe members contacting the road surface during the traveling motion become worn or damaged, it is possible to independently and easily replace each of such outer shoe members.

In the embodiments, an endless ring-shaped crawler belt, which is mounted on and round a pair of front and rear crawler wheels and rotatably driven between the pair of crawler wheels by rotatably driving at least one of the crawler wheels, comprises: a multiplicity of inner shoe members made of steel; a multiplicity of outer shoe members made of steel and arranged to oppose respective inner shoe members, an endless ring-shaped rubber belt member retained between the inner shoe members and outer shoe members respectively opposing each other; and at least one endless ring-shaped steel wire member embedded in the belt member so as to extend in the longitudinal direction. The inner shoe members are arranged side by side along the inner periphery of the belt member, the outer shoe members are arranged side by side along the outer periphery of the belt member, and a multiplicity of concave portions, which are formed side by side in the longitudinal direction between the innershoes so as to open toward the inner periphery, receive the sprocket teeth of the crawler wheels.

With a crawler belt structured as described above, the crawler wheel contacts the steel inner shoe members and engages with the crawler belt, and it is thereby possible to secure the strength of the portion contacting the crawler wheel and to improve the strength and durability of the crawler belt. Further, as the steel outer shoe members mounted on the outer periphery contact the road surface, it is also possible to improve the strength and durability of such portion. And when such steel outer shoe members become worn or damaged, it is possible to independently replace each of such outer shoe members. Repair may thereby be conduced easily and at low cost. In addition, as a rubber belt member is retained between the inner and outer shoe members and such inner and outer shoe members are mounted side by side in the longitudinal direction, the noise caused by the impact of the inner shoe members and the crawler wheel is absorbed by the rubber belt member, and the travel noise is reduced thereby. Moreover, as a wire member embedded in the belt member is formed in a ring shape so as to circumvent the crawler belt, the tensility of the wire member inhibits the crawler belt from being pulled inside upon being wound into the crawler wheel. Thus, the force of the impact of the inner shoe members and the crawler wheel is weakened, and the travel noise is reduced thereby.

It is preferable that the inner shoe members are embedded in the belt member and integrated thereto in a state where the portion contacting the crawler wheel at the inner periphery and the portion connected to the outer shoe members at the outer periphery are exposed, and the outer shoe members are connected to the inner shoe members by means of bolts at the outer exposed portion of the inner shoe members. Thereby, it is possible to connect the inner shoe members in an endless ring shape while being arranged side by side on the inner face with the belt member, and a crawler belt may be prepared by respectively connecting the outer shoe members with bolts to the portion exposed to the outer face of the inner shoe members. Thus, it is possible to easily attach and detach the respective outer shoes independently. And when such outer shoe members contacting the road surface during the traveling motion become worn or damaged, it is possible to independently and easily replace each of such outer shoe members.

## Claims

1. An endless ring-shaped crawler belt (20;50) for mounting on and around a front crawler wheel (5) and a rear crawler wheel (6) to be rotatably driven between said crawler wheels (5,6) by rotatably driving at least one of said crawler wheels (5,6), said crawler belt (20;50) comprising: a plurality of inner shoe members (21;51) made of steel; a plurality of outer shoe members (30;60) made of steel and each arranged to oppose a respective one of said inner shoe members; an endless ring-shaped rubber belt member (26;58) retained between said inner shoe members (21,51) and outer shoe members (30;60); and at least one endless ring-shaped steel wire member (59,27) embedded in said belt member (26;58) so as to extend in the longitudinal direction of the belt member; wherein said inner shoe members (21;51) are arranged side by side along the inner periphery of said belt member (58,26) and said cuter shoe members (30,60) are arranged side by side along the outer periphery of said belt member (58,26) and **characterised in that** each said inner shoe member (21;51) is partially embedded in the rubber belt member (26; 58) such that an inwards facing portion that, in use, engages the crawler wheels (5,6) and at least one outwards facing portion that is connected to the opposed outer shoe member (30;60) are exposed and **in that** screws (36) or bolts (68) by which each inner shoe member is connected to the opposed outer shoe member extend into threaded apertures (24) or holes that lead from the at least one outwards facing portion.

2. A crawler belt according to claim 1, comprising a plurality of openings (28) disposed side by side in the longitudinal direction of the belt member (26;58) between said inner shoe members (21,51) and opening toward the inner periphery of the belt member for receiving sprocket teeth of a said crawler wheel (5).

3. A crawler belt (20) according to claim 2, wherein said inner shoe members (21;51) comprise elongate rectangular members extending lengthways across the crawler belt (20), the midsection of the inner face of each rectangular member comprising said exposed inwards facing portion and a pair of guide protrusions (22;52) protruding inwardly of the belt and the ends of the rectangular members being embedded in said belt member (26;58).

4. A crawler belt (20) according to claim 2 or 3, wherein the midsection (23) of each said inner shoe member (21,51) is relatively narrow in the longitudinal direction of the crawler belt (20) and said openings (28) are formed between the midsections (23) of adjacent said inner shoes (21;51).

5. A crawler belt (20) according to any one of the preceding claims, wherein each said outer shoe member (21,51) is structured to be replaceable by disconnecting the screws (36) or bolts (68) by which it is connected to the opposed inner shoe member.

6. A crawler belt according to any one of the preceding claims, wherein the left and right sides of the outer face of each said inner shoe member (21) is covered by said belt member (26) and the midsection comprises a said exposed outwards facing portion and is provided with a plurality of said threaded apertures (24).

7. A crawler belt according to any one of claims 1 to 5, wherein the left and right ends (56) of each said inner shoe member (51) is exposed to the inner and outer periphery of said belt member (58) and comprise respective said outwards facing portions and respective said holes (68) extend from said outwards facing portions through said inner shoe members to permit connection of the inner shoe members to the outer shoe members (60) by bolts (68) and nuts (69).

8. A vehicle comprising a travel dolly (4) and a travel mechanism provided on the left and right sides of said travel dolly (4), wherein said travel mechanism comprises respective front crawler wheels (5) provided at the front part on the left and right sides of said travel dolly (4); respective rear crawler wheels (6) provided at the rear part on the left and right sides of said travel dolly (4); and respective crawler belts (20) according to any one of the preceding claims mounted and driven around the pairs of said front and rear crawler wheels (5,6) on the left and right sides of said travel dolly.

9. A vehicle according to claim 8 when dependent on a claim dependent on claim 2, wherein at least one of each said pair of crawler wheels (5 ,6) consists of a sprocket wheel (5) and said sprocket wheel (5) is rotatably driven.

## Patentansprüche

1. Endloses ringförmiges Raupenband (20; 50) zum Anbringen an und um ein vorderes Raupenrad (5) und ein hinteres Raupenrad (6), um durch drehbares Antreiben von wenigstens einem der genannten Raupenräder (5, 6) drehbar zwischen den genannten Raupenrädern (5, 6) angetrieben zu werden, wobei das genannte Raupenband (20; 50) Folgendes umfasst: eine Mehrzahl von inneren Schuhelementen (21; 51), die aus Stahl hergestellt sind; eine Mehrzahl von äußeren Schuhelementen (30; 60), die aus Stahl hergestellt sind und jeweils angeordnet sind, um einem jeweiligen der genannten inneren Schuhelemente gegenüber zu liegen; ein endloses ringförmiges Gummibandelement (26; 58), das zwischen den genannten inneren Schuhelementen (21; 51) und den genannten äußeren Schuhelementen (30; 60) gehalten wird; und wenigstens ein endloses ringförmiges Stahldrahtelement (59, 27), das in das genannte Bandelement (26; 58) eingebettet ist, so dass es in der Längsrichtung des Bandelements verläuft; wobei die genannten inneren Schuhelemente (21; 51) nebeneinander entlang der inneren Peripherie des genannten Bandelements (58, 26) angeordnet sind und die genannten äußeren Schuhelemente (30, 60) nebeneinander entlang der äußeren Peripherie des genannten Bandelements (58, 26) angeordnet sind, und **dadurch gekennzeichnet, dass** jedes genannte innere Schuhelement (21; 51) teilweise im Gummibandelement (26; 58) eingebettet ist, so dass ein einwärts gekehrter Teil, der im Gebrauch mit den Raupenrädern (5, 6) in Eingriff ist, und wenigstens ein nach außen gekehrter Teil, der mit dem gegenüberliegenden äußeren Schuhelement (30; 60) verbunden ist, freiliegen; und **dadurch**, dass Schrauben (36) oder Bolzen (68), mit denen die inneren Schuhelemente jeweils mit dem gegenüberliegenden äußeren Schuhelement verbunden sind, in mit Gewinde versehene Öffnungen (24) oder Löcher verlaufen, die von dem wenigstens einen nach außen gekehrten Teil abgehen.

2. Raupenband nach Anspruch 1, das eine Mehrzahl von Öffnungen (28) aufweist, die nebeneinander in der Längsrichtung des Bandelements (26; 58) zwischen den genannten inneren Schuhelementen (21, 51) angeordnet sind und in Richtung der inneren Peripherie des Bandelements münden zum Aufnehmen von Kettenradzähnen eines genannten Raupenrads (5).

3. Raupenband (20) nach Anspruch 2, bei dem die genannten inneren Schuhelemente (21; 51) längliche rechteckige Elemente umfassen, die längs über das Raupenband (20) verlaufen, wobei der mittlere Abschnitt der Innenseite jedes rechteckigen Elements den genannten freiliegenden einwärts gekehrten Teil und ein Paar Führungsvorsprünge (22; 52), die einwärts von dem Band vorspringen, umfasst, und wobei die Enden der rechteckigen Elemente in dem genannten Bandelement (26; 58) eingebettet sind.

4. Raupenband (20) nach Anspruch 2, bei dem der mittlere Abschnitt (23) jedes genannten inneren Schuhelements (21; 51) in der Längsrichtung des Raupenbands (20) relativ schmal ist und die genannten Öffnungen (28) zwischen den mittleren Abschnitten (23) benachbarter genannter innerer Schuhe (21; 51) gebildet sind.

5. Raupenband (20) nach einem der vorhergehenden Ansprüche, bei dem jedes genannte äußere Schuhelement (21, 51) so konstruiert ist, dass es durch Lösen der Schrauben (36) oder Bolzen (68), mit denen es mit dem gegenüberliegenden inneren Schuhelement verbunden ist, ausgetauscht werden kann.

6. Raupenband nach einem der vorhergehenden Ansprüche, bei dem die linke und die rechte Seite der Außenseite jedes genannten inneren Schuhelements (21) von dem genannten Bandelement (26) bedeckt ist und der mittlere Abschnitt einen genannten freiliegenden nach außen gekehrten Teil umfasst und mit einer Mehrzahl der genannten mit Gewinde versehenen Öffnungen (24) versehen ist.

7. Raupenband nach einem der Ansprüche 1 bis 5, bei dem das linke und das rechte Ende (56) jedes genannten inneren Schuhelements (51) zur inneren und äußeren Peripherie des genannten Bandelements (58) freiliegt und jeweilige genannte nach außen gekehrte Teile umfasst und jeweilige genannte Löcher (68) von den genannten nach außen gekehrten Teilen durch die genannten inneren Schuhelemente verlaufen, um das Verbinden der inneren Schuhelemente mit den äußeren Schuhelementen (60) durch Bolzen (68) und Muttern (69) zuzulassen.

8. Fahrzeug, das einen Unterwagen (4) und ein an der linken und rechten Seite des genannten Unterwagens (4) bereitgestelltes Fahrwerk umfasst, wobei das genannte Fahrwerk Folgendes umfasst: jeweilige vordere Raupenräder (5), die am vorderen Teil auf der linken und rechten Seite des genannten Unterwagens (4) bereitgestellt sind; jeweilige hintere Raupenräder (6), die am hinteren Teil an der linken und rechten Seite des genannten Unterwagens (4) bereitgestellt sind; und jeweilige Raupenbänder (20) nach einem der vorhergehenden Ansprüche, die an den Paaren der genannten vorderen und hinteren Raupenräder (5, 6) an der linken und rechten Seite des genannten Unterwagens angebracht sind und um sie angetrieben werden.

9. Fahrzeug nach Anspruch 8, wenn abhängig von einem von Anspruch 2 abhängigen Anspruch, bei dem wenigstens eines von jedem genannten Paar von Raupenrädern (5, 6) aus einem Kettenrad (5) besteht und das genannte Kettenrad (5) drehbar angetrieben wird.

## Revendications

1. Courroie à chenilles sans fin de forme annulaire (20 ; 50) pour le montage sur et autour d'un barbotin avant (5) et d'un barbotin arrière (6) devant être entraînée en rotation entre lesdits barbotins (5, 6) par l'entraînement en rotation d'au moins un desdits barbotins (5, 6), ladite courroie à chenilles (20 ; 50) comprenant : une pluralité d'éléments de sabots internes (21 ; 51) réalisés en acier, une pluralité d'éléments de sabots externes (30 ; 60) réalisés en acier et agencés chacun pour s'opposer à un élément respectif desdits éléments de sabots internes ; un élément de courroie en caoutchouc sans fin de forme annulaire (26 ; 58) retenu entre lesdits éléments de sabots internes (21 ; 51) et éléments de sabots externes (30 ; 60) ; et au moins un élément de fil métallique en acier sans fin de forme annulaire (59, 27) encastré dans ledit élément de courroie (26 ; 58) de manière à s'étendre dans la direction longitudinale de l'élément de courroie ; dans laquelle lesdits éléments de sabots internes (21 ; 51) sont agencés côte à côte le long de la périphérie interne dudit élément de courroie (58, 26) et lesdits éléments de sabots externes (30, 60) sont agencés côte à côte le long de la périphérie externe dudit élément de courroie (58, 26) et **caractérisée en ce que** chaque dit élément de sabot interne (21; 51) est partiellement encastré dans l'élément de courroie en caoutchouc (26; 58) de sorte qu'une portion faisant face vers l'intérieur qui, lors de son utilisation, met en prise les barbotins (5, 6) et au moins une portion faisant face vers l'extérieur qui est connectée à l'élément de sabot externe opposé (30; 60) sont exposées et **en ce que** des vis (36) ou boulons (68) par lesquels chaque élément de sabot interne est connecté à l'élément de sabot externe opposé s'étendent dans des ouvertures filetées (24) ou orifices qui conduisent de l'au moins une portion faisant face vers l'extérieur.

2. Courroie à chenilles selon la revendication 1, comprenant une pluralité d'ouvertures (28) disposées côte à côte dans la direction longitudinale de l'élément de courroie (26 ; 58) entre lesdits éléments de sabots internes (21, 51) et s'ouvrant vers la périphérie interne de l'élément de courroie pour recevoir des dents de pignon d'un dit barbotin (5).

3. Courroie à chenilles (20) selon la revendication 2, dans laquelle lesdits éléments de sabots internes (21 ; 51) comprennent des éléments rectangulaires allongés s'étendant longitudinalement en travers de la courroie à chenilles (20), la partie médiane de la face interne de chaque élément rectangulaire comprenant ladite portion faisant face vers l'intérieur exposée et une paire de saillies de guidage (22 ; 52) faisant saillie vers l'intérieur de la courroie et les extrémités des éléments rectangulaires étant encastrées dans ledit élément de courroie (26 ; 58).

4. Courroie à chenilles (20) selon la revendication 2 ou 3, dans laquelle la partie médiane (23) de chaque dit élément de sabot interne (21, 51) est relativement étroite dans la direction longitudinale de la courroie à chenilles (20) et lesdites ouvertures (28) sont formées entre les parties médianes (23) desdits sabots internes adjacents (21 ; 51).

5. Courroie à chenilles (20) selon l'une quelconque des revendications précédentes, dans laquelle chaque dit élément de sabot externe (21, 51) est structuré pour pouvoir être remplacé en déconnectant les vis (36) ou boulons (68) par lesquels il est connecté à l'élément de sabot interne opposé.

6. Courroie à chenilles selon l'une quelconque des revendications précédentes, dans laquelle les côtés gauche et droit de la face externe de chaque dit élément de sabot interne (21) sont recouverts par ledit élément de courroie (26) et la partie médiane comprend une dite portion faisant face vers l'extérieur exposée et est pourvue d'une pluralité desdites ouvertures filetées (24).

7. Courroie à chenilles selon l'une quelconque des revendications 1 à 5, dans laquelle les extrémités gauche et droite (56) de chaque dit élément de sabot interne (51) sont exposées vers la périphérie interne et externe dudit élément de courroie (58) et comprennent lesdites portions faisant face vers l'extérieur respectives et lesdits orifices respectifs (68) s'étendent desdites portions faisant face vers l'extérieur à travers lesdits éléments de sabots internes pour permettre la connexion des éléments de sabots internes aux éléments de sabots externes (60) par des boulons (68) et des écrous (69).

8. Véhicule comprenant un essieu simple de déplacement (4) et un mécanisme de déplacement prévu sur les côtés gauche et droit dudit essieu simple de déplacement (4), dans lequel ledit mécanisme de déplacement comprend des barbotins avant respectifs (5) prévus sur la partie avant sur lés côtés gauche et droit dudit essieu simple de déplacement (4), des barbotins arrière respectifs (6) prévus sur la partie arrière sur les côtés gauche et droit dudit essieu simple de déplacement (4) ; et des courroies à chenilles respectives (20) selon l'une quelconque des revendications précédentes montées et entraînées autour des paires desdits barbotins avant et arrière (5, 6) sur les côtés gauche et droit dudit essieu simple de déplacement.

9. Véhicule selon la revendication 8 lorsqu'elle dépend d'une revendication dépendant de la revendication 2, dans lequel au moins un de chaque dite paire de barbotins (5, 6) est constitué d'une roue dentée (5) et ladite roue dentée (5) est entraînée à rotation.
